(19) Europäisches Patentamt / European Patent Office / Office européen des brevets

(11) **EP 4 765 747 A1**

(12) **EUROPEAN PATENT APPLICATION**

(43) Date of publication:
**24.06.2026 Bulletin 2026/26**

(21) Application number: **25226275.3**

(22) Date of filing: **22.12.2025**

(51) International Patent Classification (IPC):
**H04L 25/02** *(2006.01)*

(52) Cooperative Patent Classification (CPC):
**H04L 25/0256; H04L 25/0242**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.12.2024 FI 20246537**

(71) Applicant: **Nokia Solutions and Networks Oy 02610 Espoo (FI)**

(72) Inventor: **PIIRAINEN, Olli Juhani Oulu (FI)**

(74) Representative: **Nokia EPO representatives Nokia Technologies Oy Karakaari 7 02610 Espoo (FI)**

(54) **A RADIO CHANNEL ESTIMATOR AND A RESPECTIVE METHOD FOR ESTIMATING A RADIO CHANNEL**

(57) The present invention relates to radio channel estimation method applying a modified Minimum Mean Square Error, MMSE, algorithm. The method (30) comprises at first correlating (31) a received signal with a Demodulation Reference Signal, DMRS, sequence for removing impact of a specific DMRS sequence. Secondly, a signal subspace separation is performed (32) by separating the signal subspace from intracell interference caused by DMRS sequences of other layers, wherein the performing is independent of the used layers and used DMRS types. Thirdly, a parameter space is created (33) from the results of the performing. Finally, a modified Minimum Mean Square Error, MMSE, algorithm is applied (34) for creating a radio channel estimate in the frequency domain from the created parameter space, where the applying is implemented as a matrix multiplication of the created parameter space with matrix **P**, where the matrix **P** is dependent on Signal to Noise Ratio, SNR.

*30*

31: Correlating a received signal with a Demodulation Reference Signal (DMRS) sequence for removing impact of a specific DMRS sequence

32: Performing a signal subspace separation by separating the signal subspace from intracell interference caused by DMRS sequences of other layers, wherein the performing is independent of the used layers and used DMRS types

33: Creating a parameter space from the results of the performing

34: Applying a modified Minimum Mean Square Error (MMSE) algorithm for creating a radio channel estimate in the frequency domain from the created parameter space, where the applying is implemented as a matrix multiplication of the created parameter space with matrix **P**, where the matrix **P** is dependent at least on Signal to Noise Ratio (SNR)

FIG. 3

EP 4 765 747 A1

**Description**

<u>**TECHNICAL FIELD**</u>

Various embodiments relate to mobile telecommunications systems, and especially to radio channel estimation applied in the receiver side of the mobile telecommunications systems.

<u>**BACKGROUND**</u>

In wireless receivers, radio channel estimation is used to obtain information about channel characteristics of an air interface and the obtained information is used by the following receiver signal processing. The quality of the obtained estimate impacts heavily on the receiver performance. This is especially true with larger number of antenna elements, the number of which keeps growing in the future.

A typical channel estimator is based on a well-known MMSE principle i.e. Minimum Mean Square Error. The implementation of the MMSE differs quite a lot between different implementations of the respective system. Some options developed for the 5G comprise:

A product estimator based on an algorithm specification of an already developed simulator, and

A structured LSE/MMSE (LSE = Least-squares estimation).

The first mentioned option is pretty much a standard MMSE with added pilot separation to avoid correlation from interference caused by a UE using other FD-OCC (frequency domain orthogonal cover codes) layer. The solution is applicable to DMRS type 1 (demodulation reference signal). For DMRS type 2, some changes would be required. Additionally, there are different power delay profiles for channels with expected lower or higher delay profiles.

The second mentioned option creates at first a least-squares time domain estimate of the channel and it is followed by an MMSE phase to weight the response and convert it to the frequency domain. The estimator needs separate matrices for least-squares part (first, middle ones and last PRB (Physical Resource Block)). The performance of this approach has been found good for SU-IRC (Single User Interference Rejection Combining) type of a receiver.

Currently applied solutions are either applicable to only some specific DMRS sequence/type, or they are applicable to only a small number of layers and thus not so well applicable to more advanced, current or future solutions (such as in 5G Advanced and in 6G). Furthermore, some of the current solutions have complicated calculation principles, or they lack in performance concerning some cases.

<u>**SUMMARY**</u>

Now, in exemplary embodiments, a method and an apparatus have been provided. According to some aspects, there is provided the subject matter of the independent claims. Various aspects include a method, an apparatus, a computer program and a non-transitory computer readable medium comprising a computer program, or a signal stored therein, which are characterized by what is stated in the independent claims. Some further aspects and various details of the embodiments are defined in the dependent claims and in the corresponding figures and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided a method for creating a radio channel estimate, the method comprising:

- correlating a received signal with a Demodulation Reference Signal, DMRS, sequence for removing impact of a specific DMRS sequence.

It is further characterized in that the method further comprises:

- performing a signal subspace separation by separating the signal subspace from intracell interference caused by DMRS sequences of other layers, wherein the performing is independent of the used layers and used DMRS types;
- creating a parameter space from the results of the performing; and
- applying a modified Minimum Mean Square Error, MMSE, algorithm for creating a radio channel estimate in the frequency domain from the created parameter space, where the applying is implemented as a matrix multiplication of the created parameter space with matrix **P,** where the matrix **P** is dependent at least on Signal to Noise Ratio, SNR.

In an embodiment, the correlating comprises creating Frequency Domain Orthogonal Cover Codes, FD-OCC, over a plurality of frequency bins, resulting in a time-shifted version of the radio channel response.

In an embodiment, in the correlating, the sequence is at least one of the following: a 4G DMRS, or a 5G DMRS, or a 6G DMRS or a Sounding Reference Signal, SRS, sequence.

In an embodiment, in the performing, a predesigned filter bank is applied, wherein the signal subspace separation is performed by a multiplication of a matrix and a vector; wherein further outputs of the filters of the filter bank are gathered to matrix **Q,** applying a stopband attenuating at least a substantial part of the interference originating from other possible layers.

In an embodiment, in the performing, only a first half or a second half of the outputs of the filters of the filter bank is calculated.

In an embodiment, in the applying, the matrix **P** is calculated by applying a diagonal matrix **B** marking the frequency bins of interest, matrix **Q,** and $R_{hh}$ which is a predefined and expected channel covariance matrix; and the Signal to Noise Ratio, SNR.

In an embodiment, in the applying, at least one of the following is used, one fixed Power Delay Profile, PDP, or different PDPs for different UEs, respectively.

In an embodiment, a plurality of matrices **P** are pre-computed for different SNR values.

In an embodiment, the SNRs are calculated by estimating the signal power from the signal subspace, and estimating the interference combined with noise from an interference subspace where a separate filter has been created for interference combined with noise estimation resembling the creation of matrix **Q.**

In an embodiment, after the correlating, resulting in y, the radio channel estimate in the frequency domain $h_f$ is determined by:

$$\mathrm{h}_f = \mathrm{P}(snr)\mathrm{Qy}$$

where matrix **Q** is obtained as an output of the filter bank during the performing, and the matrix P(snr) is obtained in the applying for a given estimated SNR.

In an embodiment, in the applying, the matrix **P** is calculated so that every other bin is calculated, and the rest of the values are obtained via interpolation.

In an embodiment, the matrix **P** is dependent on the Signal to Noise Ratio, SNR, and a Power Delay Profile, PDP.

According to a second aspect, there is provided an apparatus, the apparatus comprising:

at least one processor; and
at least one memory,
storing instructions that, when executed by the at least one processor, cause the apparatus at least to:

- correlate a received signal with a Demodulation Reference Signal, DMRS, sequence for removing impact of a specific DMRS sequence.

It is characterized in that the apparatus is further caused at least to:

- perform a signal subspace separation by separating the signal subspace from intracell interference caused by DMRS sequences of other layers, wherein the performing is independent of the used layers and used DMRS types;
- create a parameter space from the results of the performing; and
- apply a modified Minimum Mean Square Error, MMSE, algorithm for creating a radio channel estimate in the frequency domain from the created parameter space, where the applying is implemented as a matrix multiplication of the created parameter space with matrix **P,** where the matrix **P** is dependent at least on Signal to Noise Ratio, SNR.

In an embodiment, in the correlating, the correlating comprises creating Frequency Domain Orthogonal Cover Codes, FD-OCC, over a plurality of frequency bins, resulting in a time-shifted version of the radio channel response.

In an embodiment, in the correlating, the sequence is at least one of the following: a 4G DMRS, or a 5G DMRS, or a 6G DMRS or a Sounding Reference Signal, SRS, sequence.

In an embodiment, in the performing, a predesigned filter bank is applied, wherein the signal subspace separation is performed by a multiplication of a matrix and a vector; wherein further outputs of the filters of the filter bank are gathered to matrix **Q,** applying a stopband attenuating at least a substantial part of the interference originating from other possible layers.

In an embodiment, in the performing, only a first half or a second half of the outputs of the filters of the filter bank is calculated.

In an embodiment, in the applying, the matrix **P** is calculated by applying a diagonal matrix **B** marking the frequency bins of interest, matrix **Q,** and $R_{hh}$ which is a predefined and expected channel covariance matrix; and the Signal to Noise Ratio, SNR.

In an embodiment, in the applying, at least one of the following is used, one fixed Power Delay Profile, PDP, or different PDPs for different UEs, respectively.

In an embodiment, a plurality of matrices **P** are pre-computed for different SNR values.

In an embodiment, the SNRs are calculated by estimating the signal power from the signal subspace, and estimating the interference combined with noise from an interference subspace where a separate filter has been created for interference combined with noise estimation resembling the creation of matrix **Q**.

In an embodiment, after the correlating, resulting in y, the radio channel estimate in the frequency domain $h_f$ is determined by:

$$\mathbf{h}_f = \mathbf{P}(snr)\mathbf{Q}\mathbf{y}$$

where matrix **Q** is obtained as an output of the filter bank during the performing, and the matrix **P**(snr) is obtained in the applying for a given estimated SNR.

In an embodiment, in the applying, the matrix **P** is calculated so that every other bin is calculated, and the rest of the values are obtained via interpolation.

In an embodiment, the matrix **P** is dependent on the Signal to Noise Ratio, SNR, and a Power Delay Profile, PDP.

According to a third aspect, there is provided a computer program comprising instructions which, when executed by an apparatus, cause the apparatus at least to perform:

- correlating a received signal with a Demodulation Reference Signal, DMRS, sequence for removing impact of a specific DMRS sequence.

It is characterized in that the apparatus is further caused to perform at least the following:

- performing a signal subspace separation by separating the signal subspace from intracell interference caused by DMRS sequences of other layers, wherein the performing is independent of the used layers and used DMRS types;
- creating a parameter space from the results of the performing; and
- applying a modified Minimum Mean Square Error, MMSE, algorithm for creating a radio channel estimate in the frequency domain from the created parameter space, where the applying is implemented as a matrix multiplication of the created parameter space with matrix P, where the matrix P is dependent at least on Signal to Noise Ratio, SNR.

In various embodiments of the computer program, the embodiments disclosed above in connection with the method (i.e. with the first aspect) are also applicable, respectively.

According to a fourth aspect, there is provided a non-transitory computer readable medium comprising program instructions that, when executed by an apparatus, cause the apparatus to perform at least the following:

- correlating a received signal with a Demodulation Reference Signal, DMRS, sequence for removing impact of a specific DMRS sequence.

It is characterized in that the apparatus is further caused to perform at least the following:

- performing a signal subspace separation by separating the signal subspace from intracell interference caused by DMRS sequences of other layers, wherein the performing is independent of the used layers and used DMRS types;
- creating a parameter space from the results of the performing; and
- applying a modified Minimum Mean Square Error, MMSE, algorithm for creating a radio channel estimate in the frequency domain from the created parameter space, where the applying is implemented as a matrix multiplication of the created parameter space with matrix P, where the matrix **P** is dependent at least on Signal to Noise Ratio, SNR.

In various embodiments of the non-transitory computer readable medium, the embodiments disclosed above in connection with the method (i.e. with the first aspect) are also applicable, respectively.

According to a fifth aspect, an apparatus is provided, wherein the apparatus comprises:

- means for correlating a received signal with a Demodulation Reference Signal, DMRS, sequence for removing impact of a specific DMRS sequence.

It is characterized in that the apparatus further comprises:

- means for performing a signal subspace separation by separating the signal subspace from intracell interference caused by DMRS sequences of other layers, wherein the performing is independent of the used layers and used DMRS types;
- means for creating a parameter space from the results of the performing; and
- means for applying a modified Minimum Mean Square Error, MMSE, algorithm for creating a radio channel estimate in the frequency domain from the created parameter space, where the applying is implemented as a matrix multiplication of the created parameter space with matrix P, where the matrix **P** is dependent at least on Signal to Noise Ratio, SNR.

In various embodiments of the apparatus according to the fifth aspect, the embodiments disclosed above in connection with the method (i.e. with the first aspect) are also applicable, respectively.

In an embodiment, the apparatus further comprises means for correlating, wherein in the correlating, the correlating comprises creating Frequency Domain Orthogonal Cover Codes, FD-OCC, over a plurality of frequency bins, resulting in a time-shifted version of the radio channel response.

In an embodiment, the apparatus further comprises means for correlating, wherein in the correlating, the sequence is at least one of the following: a 4G DMRS, or a 5G DMRS, or a 6G DMRS or a Sounding Reference Signal, SRS, sequence.

In an embodiment, the apparatus further comprises means for performing, wherein in the performing, a predesigned filter bank is applied, wherein the signal subspace separation is performed by a multiplication of a matrix and a vector; wherein further outputs of the filters of the filter bank are gathered to matrix **Q,** applying a stopband attenuating at least a substantial part of the interference originating from other possible layers.

In an embodiment, the apparatus further comprises means for performing, wherein in the performing, only a first half or a second half of the outputs of the filters of the filter bank is calculated.

In an embodiment, the apparatus further comprises means for applying, wherein in the applying, the matrix **P** is calculated by applying a diagonal matrix **B** marking the frequency bins of interest, matrix **Q,** and $\mathbf{R}_{hh}$ which is a predefined and expected channel covariance matrix; and the Signal to Noise Ratio, SNR.

In an embodiment, the apparatus further comprises means for applying, wherein in the applying, at least one of the following is used, one fixed Power Delay Profile, PDP, or different PDPs for different UEs, respectively.

In an embodiment, the apparatus further comprises means for pre-computing a plurality of matrices **P** for different SNR values.

In an embodiment, the apparatus further comprises means for performing at least the following: the SNRs are calculated by estimating the signal power from the signal subspace, and estimating the interference combined with noise from an interference subspace where a separate filter has been created for interference combined with noise estimation resembling the creation of matrix **Q.**

In an embodiment, the apparatus further comprises means for performing at least the following: after the correlating, resulting in y, the radio channel estimate in the frequency domain $\mathbf{h}_f$ is determined by:

$$\mathrm{h}_f = \mathrm{P}(snr)\mathrm{Qy}$$

where matrix **Q** is obtained as an output of the filter bank during the performing, and the matrix P(snr) is obtained in the applying for a given estimated SNR.

In an embodiment, the apparatus further comprises means for applying, wherein in the applying, the matrix **P** is calculated so that every other bin is calculated, and the rest of the values are obtained via interpolation.

In an embodiment, the apparatus further comprises means for performing at least the following: the matrix **P** is dependent on the Signal to Noise Ratio, SNR, and a Power Delay Profile, PDP.

**BRIEF DESCRIPTION OF THE DRAWINGS**

For a more complete understanding of the example embodiments, reference is now made to the following descriptions taken in connection with the accompanying drawings in which:

FIG. 1 illustrates the time domain response of interfering other layers (i.e. impulse shifts),
FIG. 2 illustrates a filter bank response in time domain, in an embodiment of the present invention,
FIG. 3 illustrates a flow chart according to an embodiment of the present invention,
FIG. 4a illustrates an exemplary radio network scenario in accordance with at least some embodiments of the present invention, and
FIG. 4b illustrates a simplified block diagram of a network node according to an embodiment of the present invention.

**DETAILED DESCRIPTION OF SOME EXAMPLE EMBODIMENTS**

The embodiments relate to topics and characteristics related to the channel estimation in various technologies and also in the upcoming technologies such as in 5G Advanced and in 6G.

Certain topics are discussed in various embodiments as follows.

A topic relates to the suitability for HW (hardware) acceleration and vector processor calculations. Another topic relates to support for higher number of layers. Yet another topic is related to good performance.

The first topic is addressed by creating a channel estimator with limited number of computations as well as a so-called lean structure for the processing. The latter part of the first topic means that the required computations are suitable for HW-close implementations, e.g. simple matrix multiplications with no branching (if using commands), and also avoiding unnecessary configurations and also that the need for memory accesses are limited.

The second topic relates in practice in requirements for future estimators. Current 5G specification has support for 8 (DMRS type 1) or max. 12 (DMRS type 2) layers. Currently in 5G release 18 (i.e. in 5G Advanced), it is considered to increase the number of layers to 16 or 24. 6G might consider to even have larger numbers of layers, but that calls for substantially larger antennas.

An estimator according to certain embodiments creates an MMSE estimate in the following three phases. The MMSE estimate creation under discussion applies a modified version of the previously known, classical MMSE algorithm. Therefore, the used estimator is called in many instances later as a modified MMSE estimator.

A first phase is a correlation of a received signal with a DMRS sequence.

A second phase is signal subspace separation and creation of a parameter space for a following MMSE calculation phase.

A third phase is that the MMSE calculation phase is performed. An MMSE algorithm is developed specifically for the subspace which creates a frequency domain estimate from the given parameter space.

The first phase removes the impact of a specific DMRS sequence to make the following phase independent of the used layers. This is an advantage of this particular phase, making the usability broader.

The second phase separates a signal subspace from intra-cell interference caused by other layers' DMRS sequences. A single constant process that suites for DMRS type 1, type 2 added "release 18" for 16 or even 24 layers, PUCCH (Physical Uplink Control Channel), SRS (Sounding Reference Signal) or even LTE (long-term evolution) sequences is created. Thus, this may be a more flexible approach to support possible 6G technology related approaches as well.

In the third phase, an actual channel estimate is created in the frequency domain. This phase is in practice enabled by a modified MMSE estimator that is developed and applied for the output data of the second phase. As this output data now comprises the subspace parameters from the previous phase, the modified MMSE estimator needs to be designed specifically for this case. In other words, there are some changes to the "classical" MMSE channel estimation algorithm, and therefore, the resulting estimator is called as a modified MMSE estimator. Still, the modified MMSE estimator involves MMSE calculation but also some novel phases.

An embodiment of a technical implementation option is discussed next.

The DMRS sequences use different approaches to obtain orthogonal DMRS sequences. The first one is to use different frequency bins for different layers. This creates orthogonal sequences but has a downside of being less advantageous for interference estimation (as interference would have limited number of non-zero DMRS bins). The second one is to use TD-OCC (Time Domain Orthogonal Cover Codes) which uses several OFDM (Orthogonal frequency-division multiplexing) symbols to create additional layers. This approach may work well, but the added DMRS symbols are taken from data traffic which may reduce the data throughput.

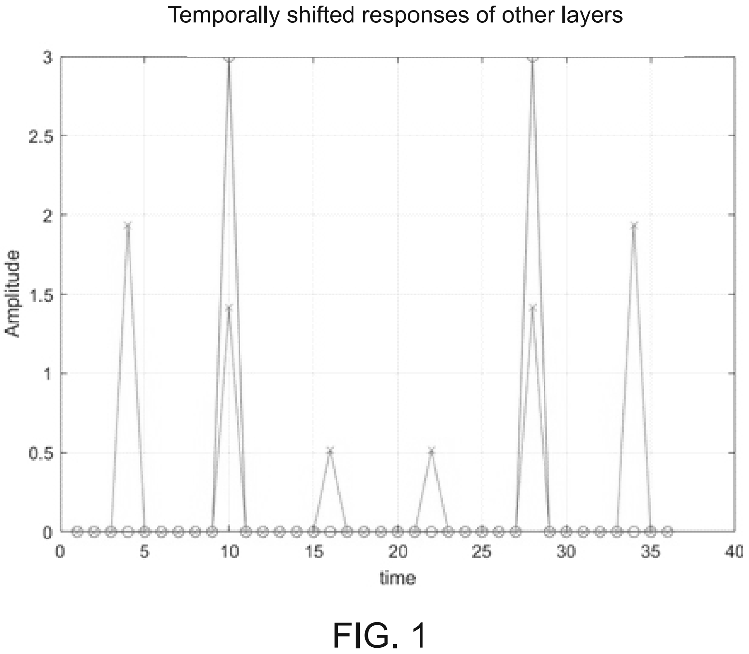

A third option is FD-OCC (Frequency Domain Orthogonal Cover Codes) in which the orthogonal cover codes are created over several frequency bins in frequency domain. In practice, the FD-OCC (in LTE and 5G) creates time-shifted versions of the channel response. In **FIG. 1,** there are time domain responses of an impulse from other layers using DMRS type 1 and type 2 seen over three times oversampling of a PRB. A similar approach is assumed to be continued also with release 18 DMRS sequences and related simulation results later.

The description here is related to 4G, 5G DMRS, and SRS (Sounding Reference Signals) sequences. There may be even more different approaches to generate orthogonal DMRS sequences, but the embodiments may be adapted to those approaches as well. The embodiments are not limited to the current approaches (as in the above), but these approaches serve as examples for describing the embodiments.

Next, a signal subspace separation is discussed in an embodiment.

Basically, in the signal subspace separation, two issues are considered: to create a sufficient parameter space for the following MMSE phase (Minimum Mean Square Error) to be able to create an actual frequency domain channel response and sufficient attenuation for all possible interference(s) coming from the other layers.

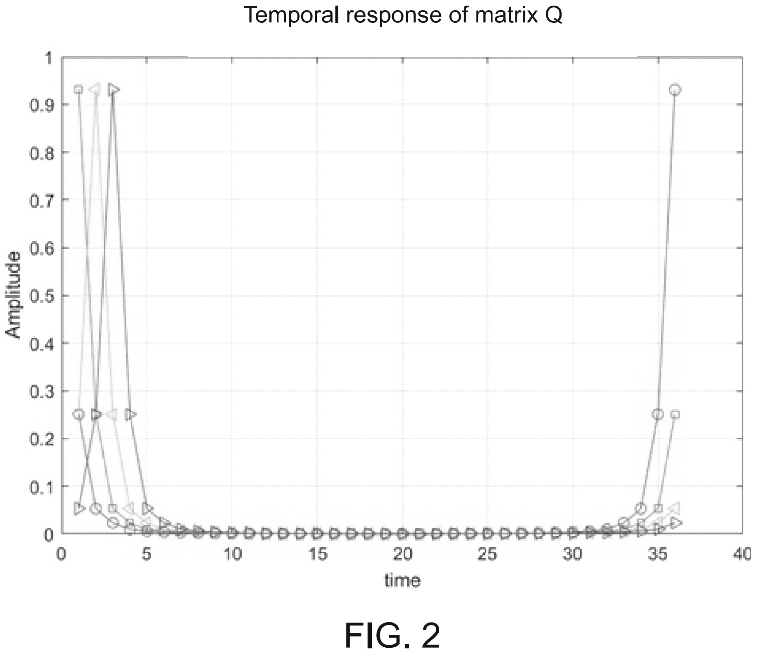

The approach here, in an embodiment, can be described as designing a filter bank in frequency domain. Each of the filters provide one output parameter. The target is to get a sufficient number of parameters that cover the signal space sufficiently while the stopband attenuates all the interference from other possible layers regardless of DMRS type 1 or type 2, etc. Here, an example of the response of prototype filters are shown in **FIG. 2.** The responses of the separate filters are collected to matrix **Q.** Thus, the signal subspace separation is basically a matrix-vector multiplication.

Furthermore, some further matters are discussed next concerning the implementation. The filter bank may be designed in such a way that there is symmetry in the responses. In this example, the filters have length of 36 (three PRBS) and but due to symmetry in the filter bank outputs, only a first half (or respectively, a second i.e. a latter half) needs to be calculated. Thus, the matrix size is 4x18 for the given example. This is constant for all PRBS as well as for type 1 and 2 and "release 18" 16 layers, SRS, LTE DMRS, and so on. As mentioned above, the respective advantage of the first correlation phase, and the following signal subspace separation phase is that the process is constant and it suites to be used in various different techniques (comprising various types of sequences) and telecommunication technologies, as mentioned in the above. This makes the presented inventive process a broadly applicable process within different technologies, comprising also 6G-based approaches.

Below is a Matlab example of the use of symmetry. The data needs to be organized for the following matrix multiplication ("fri1" is input data of three PRBS, "etaps" is a result).

```
frira        =  fri1(1:end/2,:) + fri1(end:-1:(end/2+1),:)

frirb        = (-fri1(1:end/2,:) + fri1(end:-1:(end/2+1),:);

etapsa = real(recv.Q(1:end/2,:))' * frira;

etapsb = imag(recv.Q(1:end/2,:))' * frirb;

etaps = (etapsa + 1i*etapsb);
```

This represents merely an embodiment for the respective calculation, and there may be other kinds of scripts (Matlab or something else) for the respective calculation.

Next, it is proceeded to the MMSE phase.

The modified MMSE estimator for the given subspace, in an embodiment, is given as:

$$\mathbf{P} = \mathrm{B} E(\mathrm{h}_{orig} \mathrm{h}_{orig}^H) \mathrm{Q} (\mathrm{Q}^H E(\mathrm{h}_{orig} \mathrm{h}_{orig}^H + \sigma^2 \mathrm{I}) * \mathrm{Q})^{-1}$$

$$= \mathrm{B} \mathrm{R}_{hh} \mathrm{Q} \left( \mathrm{Q}^H \mathrm{R}_{hh} \mathrm{Q} + \frac{1}{snr} \mathrm{Q}^H \mathrm{Q} \right)^{-1} \tag{1}$$

where matrix **B** is a diagonal matrix and marks the frequency bins of interest, **Q** is the matrix defined in the above, and **R**$_{hh}$ is the expected channel covariance matrix (predefined). The derivation of the equation is omitted here. In the following, only one fixed power delay profile (PDP) is used. It is straightforward to add several profiles for UEs with a different expected delay profile.

The matrix **P** may be precomputed for various SNR (Signal to Noise Ratio) values and the creation of a channel estimate is again a matrix vector multiplication. Thus, the channel estimation is described by two matrix multiplications after the DMRS correlation. According to an embodiment, matrix P is a function of SNR, and the radio channel estimate in the frequency domain, $h_f$, is defined as:

$$\mathrm{h}_f = \mathrm{P}(snr) \mathrm{Q} \mathrm{y} \tag{2}$$

The size of **P** is a matrix of 12x4, and it is possible to reduce it to e.g. 6x4, if every other bin is calculated and the rest of the values are interpolated.

The SNR estimation may be done in several ways. Some of them are described next. The signal power may be estimated directly from the signal subspace. The interference (plus noise term) may be estimated as in the algorithm specification of an already developed simulator, assuming noise level is a constant, or estimating the interference power from the "interference subspace" creating a separate filter for interference estimation (similar to **Q).**

According to another embodiment, matrix P is a function of both the SNR and the power delay profile (PDP), and the radio channel estimate in the frequency domain, $h_f$, is defined as:

$$h_f = P(SNR, profile) \times Q \times y \qquad\qquad (3)$$

In a further embodiment under equation (3), there may be for instance two different values of the profile (i.e. PDP), which means that matrix P may be precomputed for various SNR value and PDP value combinations. For instance, if there are four different SNR values, and two different PDP values, there will be eight different matrices P which may be used in the calculations of $h_f$.

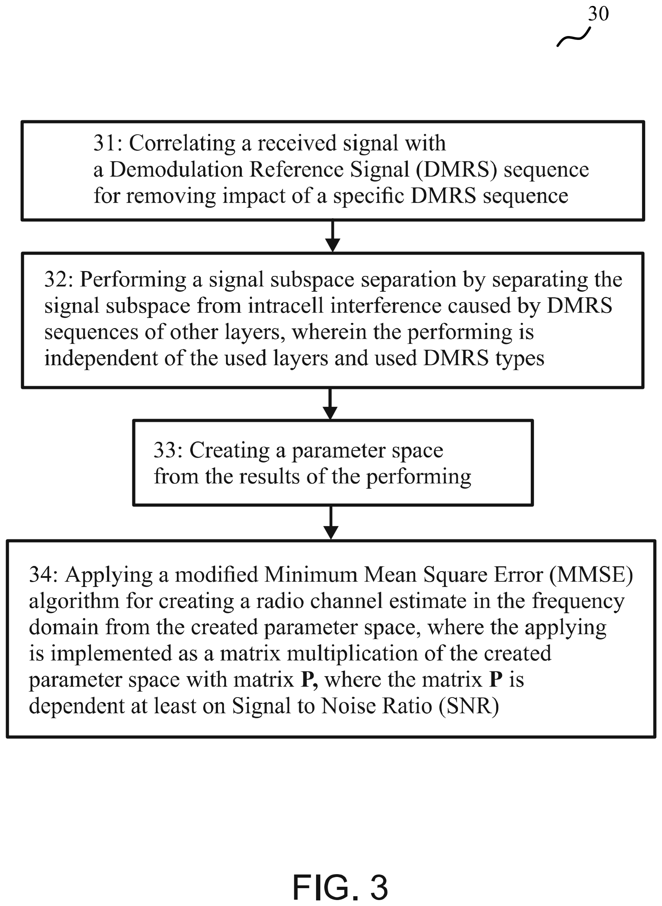

FIG. 3 illustrates a flow chart according to an embodiment.

The shown embodiment presents a method 30 for creating a radio channel estimate, in a form of a flow chart.

At 31, the method comprises correlating 31 a received signal with a Demodulation Reference Signal (DMRS) sequence for removing impact of a specific DMRS sequence.

At 32, the method comprises performing 32 a signal subspace separation by separating the signal subspace from intracell interference caused by DMRS sequences of other layers, wherein the performing is independent of the used layers and used DMRS types.

At 33, the method comprises creating 33 a parameter space from the results of the performing.

At 34, the method comprises applying 34 a modified Minimum Mean Square Error (MMSE) algorithm for creating a radio channel estimate in the frequency domain from the created parameter space, where the applying is implemented as a matrix multiplication of the created parameter space with matrix **P,** where the matrix **P** is dependent at least on Signal to Noise Ratio (SNR).

FIG:s 4a and 4b illustrate an example of a wireless telecommunication network implementation and an example of an apparatus as part of the exemplary telecommunication network implementation.

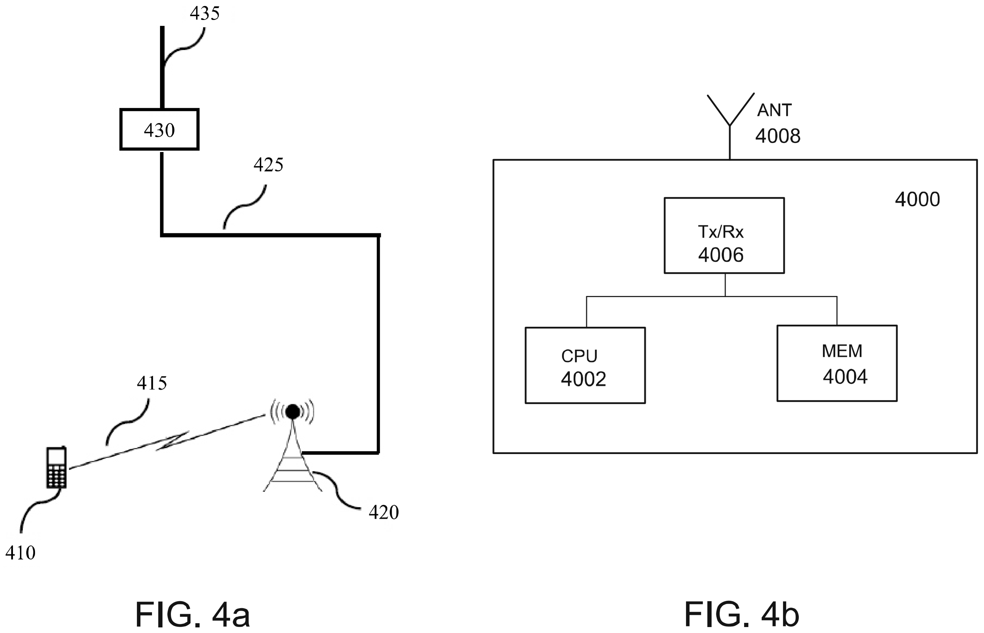

FIG. 4a illustrates an exemplary radio network scenario in accordance with at least some embodiments of the present invention. According to the example scenario of FIG. 4a, there may be a wireless communication network, which comprises User Equipment, UE 410, an access node, such as a Base Station, BS, 420, and core network element 430.

The embodiments concentrate on the receiver side of a radio connection, and FIG. 4a presents an example of an uplink connection, i.e. the UE 410 transmits, and the base station 420 receives. In this example, the presented method is performed in the receiving end, i.e. in the base station 420. Naturally, the embodiments may be applied in a downlink connection, i.e. for wireless transmissions sent by the BS 420 and received by the UE 410. In that situation, the presented method is performed in the receiving end, too, but the receiver is then the UE 410, applying the presented method. The configuration of FIG. 4a presents merely a single example of many possible apparatuses within many possible wireless communication systems. Thus, embodiments are not restricted solely to apparatus, connection type/direction and system examples of FIG:s 4a and 4b.

Back to FIG. 4a, UE 410 may comprise, for example, a smartphone, a cellular phone, a Machine-to-Machine (M2M) node, Machine-Type Communications (MTC) node, an Internet of Things (IoT) node, a car, a car telemetry unit, a laptop computer, a tablet computer or another kind of suitable UE or mobile station. Generally, UE refers to any end device that may be capable of wireless communication. It can be either a mobile device or a stationary device. By way of example rather than limitation, a UE may also be referred to as a communication device, a terminal device, a Subscriber Station (SS), a Portable Subscriber Station, a Mobile Station (MS), or an Access Terminal (AT). In the example system of FIG. 4a, UE 410 may communicate wirelessly with BS 420, or with a cell of BS 420, via air interface 415. In some example embodiments, BS 420 may be considered as a serving BS, for UE 410. UE 410 may also communicate simultaneously with more than one BS 420 and/or more than one cell of BS 420.

BS 420 may be connected, directly or via at least one intermediate node, with core network 430 via interface 425. Core network 430 may be, in turn, coupled via interface 435 with another network (not shown in FIG. 4a), via whichever connectivity to further networks may be obtained, for example via a worldwide interconnection network. BS 420 may be connected with one or multiple other BS as well via an inter-base station interface (not shown in FIG. 4a).

UE 410 may be connected to BS 420 via air interface 415. Air interface 415 between UE 410 and BS 420 may be configured in accordance with a Radio Access Technology, RAT, which UE 410 and BS 420 are configured to support. Examples of cellular RATs include Long Term Evolution (LTE), New Radio (NR), which may also be known as fifth generation (5G) radio access technology. For example, in the context of LTE, BS 420 may be referred to as an eNB while in the context of NR, BS 420 may be referred to as a gNB. In any case, example embodiments are not restricted to any particular radio technology. Instead, example embodiments may be exploited in any wireless communication network (which may be a cellular or a non-cellular technology) operating in accordance to 3GPP standard, IEEE standard (such as for example IEEE 802.11 based local area networks), or it can be some other radio technology, wherein it is desirable to achieve an improved transmission and/or reception performance between an access node such as a BS, and a UE, and in particular, an improved MIMO performance.

Ever increasing data throughput requirements in wireless communication networks requires usage of wide frequency spectrum. Thus, for example, frequency bands for 5G (also referred to as NR) are currently separated into different frequency ranges. Frequency Range 1 (FR1) includes sub-6 GHz frequency bands, some of which are frequency bands traditionally used by previous standards, but the range has been extended to cover potential new spectrum offerings up to 7125 MHz. Another range is Frequency Range 2 (FR2) that at the moment includes frequency bands from 24.25 GHz to 52.6 GHz. Frequencies of this range and above are referred to as mmWave frequencies. MmWave frequency ranges are attractive because of higher available bandwidth than frequency bands in the FR1, which helps to offer data rates that satisfy 5G demands.

The described embodiments can be particularly beneficial for mmWave frequencies, including FR2 ranges, but can be applied equally to FR1 or any other frequencies. As said earlier, although applicable to any wireless networks, the 5G is mainly focused in the discussed examples, for the sake of simplicity. 5G has been envisaged to use more base stations or nodes than the current network deployments of LTE (a so-called small cell concept), including macro sites operating in co-operation with smaller local area access nodes and perhaps also employing a variety of radio technologies for better coverage and enhanced data rates. 5G will likely be comprised of more than one radio access technology / radio access network (RAT/RAN), each optimized for certain use cases and/or spectrum. 5G mobile communications may have a wider range of use cases and related applications including video streaming, augmented reality, different ways of data sharing and various forms of machine type applications, including vehicular safety, different sensors and real-time control.

MIMO is one of the key enabling techniques for 5G wireless technology. The underlying principle of MIMO is to use multiple transmit and receive antennas to increase throughput and/or reliability of data transmission. Increased throughput can be achieved by transmitting/receiving different data streams over multiple antennas, while increased reliability can be achieved by using multiple antennas for transmitting/receiving multiple versions of the same data.

Beamforming antenna arrays play an important role in 5G implementations. Although offering high bandwidth, mmWave frequencies have higher propagation losses that greatly vary depending on the environment. Smaller wavelength at higher carrier frequencies allows smaller antenna element sizes which gives an opportunity to place one or more (for example, two, three or more) relatively large antenna arrays at a UE. This in turn leads to various challenges to maintain the expected performance.

Considering, as a non-limiting example, 2x2 MIMO, downlink (DL) MIMO performance (for example, in mmWave frequency ranges, such as FR2) may be achieved by using polarization split (co-polar and cross-polar) of a dual feed antenna array at a base station (referred to also as a gNB) and/or at a UE, where each polarization corresponds to one MIMO branch. The reasoning behind this approach is to achieve high and similar antenna gain performance in both MIMO channels, while maintaining a compact spatial antenna design.

When designing dual-polarized antenna arrays, it is important to achieve high Cross Polarization Discrimination (XPD). XPD may be defined as a ratio of the co-polar component of the specified polarization and the orthogonal cross-polar component over a sector or beamwidth angle.

De-correlation at an antenna array may be obtained by ensuring that each antenna feed corresponds to a single polarization and that the resulting dual feed polarizations are designed to be orthogonal. This way, an antenna array with high XPD at the feed points may be designed. This approach will ensure full utilization of two MIMO channels for Line of Sight (LoS) and/or Non-Line of Sight (NLoS) operation provided that the maximum gain direction and the orientation of the orthogonal polarizations are aligned between antenna arrays at the UE and at the gNB.

In addition, high antenna gain requirements for mmWave (e.g. FR2) frequencies will reduce its radiation beam width, whereby beam steering at an antenna array (or arrays) is required to cover the needed angular space. The beam steering capabilities may be implemented using tunable phase shifters at each element in the antenna array, whereby the direction of the beam can be controlled electrically (phased array) instead of mechanical control.

The XPD of any antenna (or antenna array) depends on its radiation pattern and may change dynamically as a function of the Angle of Departure (AoD) and/or Angle of Arrival (AoA). This dependency increases as the variations in the radiation pattern change and as the radiation patterns change electrically. Higher antenna gain pattern leads to larger XPD variations over the angular space. Phase controlled arrays also have increased XPD variations over the angular space.

As such, the physical orientation of antennas at mmWave frequencies will affect MIMO throughput much more than what is seen at Sub-6 GHz frequencies, where the decorrelation at the UE is achieved by physical separation between two receiving antennas (each with random and different radiation pattern). Instead, the mmWave architecture may utilize dual orthogonally polarized antennas (or antenna arrays), designed for equal high gain radiation patterns.

FIG. 4b illustrates an example of an apparatus 4000 for wireless communications which apparatus involves a transmitter and a receiver (i.e. a transceiver 4006). The apparatus may be a base station 420 in this example. In the following sections, the apparatus 4000 is also called as a network node.

Such apparatuses may comprise e.g. the functional units disclosed in FIG. 4b showing a simplified block diagram of a network node, i.e. the apparatus, according to the aspects and the related embodiments.

The network node 4000 of FIG. 4b may be a base station, an access point, an access node, a gNB, an evolved NodeB (eNB), a server, a host, or any other network entity that may communicate with the UE 410.

The apparatus may include at least one processor or control unit or module 4002 (marked as CPU). At least one memory 4004 may be provided in the apparatus. The memory 4004 may include computer program instructions or computer code contained therein. One or more transceivers 4006 may be provided, and the apparatus may also include an antenna 4008. Although only one antenna is shown, many antennas and multiple antenna elements may be provided in the apparatus. Other configurations of the apparatus, for example, may be provided. For example, in addition to wireless communication, the network node may be additionally configured for wired communication with the UE, and in such a case antenna 4008 may illustrate any form of communication hardware, without being limited to merely an antenna.

Transceiver 4006 may be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. The operations and functionalities may be performed in different entities, such as nodes, hosts or servers, in a flexible manner. In other words, division of labor may vary case by case. One possible use is to make a network node deliver local content. One or more functionalities may also be implemented as virtual application(s) in software that can run on a server.

In certain embodiments, the apparatus 4000 may comprise at least one processor 4002 and at least one memory 4004 including computer program code. The at least one memory 4004 including computer program code can be configured to, with the at least one processor 4002, cause the apparatus 4000 at least to perform any of the processes described herein.

Processors 4002 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors 4002 may be implemented as a single controller, or a plurality of controllers or processors.

For firmware or software, the implementation may include modules or unit of at least one chip set (for example, procedures, functions, and so on). The at least one memory 4004 may independently be any suitable storage device, such as a non-transitory computer-readable medium. A hard disk drive (HDD), random access memory (RAM), flash memory, or other suitable memory may be used. The memory 4004 may be combined on a single integrated circuit as the processor 4002, or it may be separate therefrom. Furthermore, the computer program instructions may be stored in the memory 4004 and which may be processed by the processors 4002 can be any suitable form of computer program code, for example, a compiled or interpreted computer program written in any suitable programming language. The memory 4004 or data storage entity is typically internal, but it may also be external or a combination thereof, such as in the case when additional memory capacity is obtained from a service provider. The memory 4004 may be fixed or removable.

The memory 4004 and the computer program instructions may be configured, with the processor 4002 for the particular device, to cause a hardware apparatus such as network node 4000, to perform any of the processes described above. Therefore, in certain embodiments, a non-transitory computer-readable medium may be encoded with instructions or one or more computer program (such as added or updated software routine, applet or macro) that, when executed in hardware, may perform a process such as one of the processes described herein. In other embodiments, a computer program product may encode instructions for performing any of the processes described above, or a computer program product embodied in a non-transitory computer-readable medium and encoding instructions that, when executed in hardware, perform any of the processes describes above. Computer programs may be coded by a programming language, which may be a high-level programming language, such as objective-C, C, C++, C#, Java, etc., or a low-level programming language, such as a machine language, or assembler. Alternatively, certain embodiments may be performed entirely in hardware.

Some advantages of the embodiments may be summarized as follows.

The solutions according to the embodiments enable a process, where the radio channel estimation is possible to be carried out with good performance, for various DMRS sequences/types, and also to any number of layers available in more advanced current or future telecommunications solutions (such as in 5G Advanced and in 6G). Furthermore, the embodiments are suitable for hardware-based acceleration and vector processor calculations, which enable the calculation principles to be simpler and thus, regarding processor efficiency and used time, the embodiments may present a more effective solution. All this may be obtained with good performance in various use cases in different telecommunication technologies and generations. In other words, the radio channel estimation results may be provided with good accuracy and with effective processor usage.

The foregoing description has provided by way of exemplary and non-limiting examples an informative description of the exemplary embodiments. However, various modifications and adaptations may become apparent to those skilled in the relevant arts in view of the foregoing description, when read in conjunction with the accompanying drawings and the appended examples. However, all such and similar modifications of the teachings will still fall within the scope. The scope is determined by the appended claims.

**Claims**

**1.** An apparatus, the apparatus comprising:

means for correlating a received signal with a Demodulation Reference Signal, DMRS, sequence for removing impact of a specific DMRS sequence;

**characterized in that** the apparatus is further caused at least to:

means for performing a signal subspace separation by separating the signal subspace from intracell interference caused by DMRS sequences of other layers, wherein the performing is independent of the used layers and used DMRS types;

means for creating a parameter space from the results of the performing; andmeans for applying a modified Minimum Mean Square Error, MMSE, algorithm for creating a radio channel estimate in the frequency domain from the created parameter space, where the applying is implemented as a matrix multiplication of the created parameter space with matrix P, where the matrix P is dependent at least on Signal to Noise Ratio, SNR.

2. A method for creating a radio channel estimate, the method comprising:

correlating a received signal with a Demodulation Reference Signal, DMRS, sequence for removing impact of a specific DMRS sequence;

**characterized in that** the method further comprises:

performing a signal subspace separation by separating the signal subspace from intracell interference caused by DMRS sequences of other layers, wherein the performing is independent of the used layers and used DMRS types;

creating a parameter space from the results of the performing; and

applying a modified Minimum Mean Square Error, MMSE, algorithm for creating a radio channel estimate in the frequency domain from the created parameter space, where the applying is implemented as a matrix multiplication of the created parameter space with matrix P, where the matrix P is dependent at least on Signal to Noise Ratio, SNR.

3. The apparatus according to claim 1 further comprising means for correlating, or the method according to claim 2, wherein in the correlating, the correlating comprises creating Frequency Domain Orthogonal Cover Codes, FD-OCC, over a plurality of frequency bins, resulting in a time-shifted version of the radio channel response.

4. The apparatus according to claim 1 further comprising means for correlating, or the method according to claim 2, wherein in the correlating, the sequence is at least one of the following: a 4G DMRS, or a 5G DMRS, or a 6G DMRS or a Sounding Reference Signal, SRS, sequence.

5. The apparatus according to claim 1 further comprising means for performing, or the method according to claim 2, wherein in the performing, a predesigned filter bank is applied, wherein the signal subspace separation is performed by a multiplication of a matrix and a vector; wherein further outputs of the filters of the filter bank are gathered to matrix **Q,** applying a stopband attenuating at least a substantial part of the interference originating from other possible layers.

6. The apparatus according to claim 5 further comprising means for performing, or the method according to claim 5, wherein in the performing, only a first half or a second half of the outputs of the filters of the filter bank is calculated.

7. The apparatus according to claim 5 further comprising means for applying, or the method according to claim 5, wherein in the applying, the matrix P is calculated by applying a diagonal matrix B marking the frequency bins of interest, matrix **Q,** and $R_{hh}$ which is a predefined and expected channel covariance matrix; and the Signal to Noise Ratio, SNR.

8. The apparatus according to claim 5 further comprising means for applying, or the method according to claim 5, wherein in the applying, at least one of the following is used, one fixed Power Delay Profile, PDP, or different PDPs for different UEs, respectively.

9. The apparatus according to claim 7 further comprising means for precomputing, or the method according to claim 7, wherein a plurality of matrices P are pre-computed for different SNR values.

10. The apparatus according to claim 9 further comprising means for performing at least the following, or the method according to claim 9, wherein,

the SNRs are calculated by estimating the signal power from the signal subspace, and estimating the interference combined with noise from an interference subspace where a separate filter has been created for interference

**EP 4 765 747 A1**

combined with noise estimation resembling the creation of matrix Q.

11. The apparatus according to claim 1 furhter comprising means for performing at least the following, or the method according to claim 2, wherein,
after the correlating, resulting in y, the radio channel estimate in the frequency domain $\mathbf{h}_f$ is determined by:

$$\mathbf{h}_f = \mathrm{P}(snr)\mathrm{Q}\mathbf{y}$$

where matrix Q is obtained as an output of the filter bank during the performing, and the matrix P(snr) is obtained in the applying for a given estimated SNR.

12. The apparatus according to claim 1 further comprising means for applying, or the method according to claim 2, wherein in the applying, the matrix P is calculated so that every other bin is calculated, and the rest of the values are obtained via interpolation.

13. The apparatus according to claim 1 further comprising means for performing at least the following, or the method according to claim 2, wherein,
the matrix P is dependent on the Signal to Noise Ratio, SNR, and a Power Delay Profile, PDP.

14. A computer program comprising instructions which, when executed by an apparatus, cause the apparatus at least to perform the method of claims 2 to 13.

FIG. 1

Temporal response of matrix Q

FIG. 2

EP 4 765 747 A1

30

31: Correlating a received signal with
a Demodulation Reference Signal (DMRS) sequence
for removing impact of a specific DMRS sequence

32: Performing a signal subspace separation by separating the
signal subspace from intracell interference caused by DMRS
sequences of other layers, wherein the performing is
independent of the used layers and used DMRS types

33: Creating a parameter space
from the results of the performing

34: Applying a modified Minimum Mean Square Error (MMSE)
algorithm for creating a radio channel estimate in the frequency
domain from the created parameter space, where the applying
is implemented as a matrix multiplication of the created
parameter space with matrix $\mathbf{P}$, where the matrix $\mathbf{P}$ is
dependent at least on Signal to Noise Ratio (SNR)

# FIG. 3

FIG. 4a

FIG. 4b

EP 4 765 747 A1

Europäisches
Patentamt
European
Patent Office
Office européen
des brevets

**EUROPEAN SEARCH REPORT**

Application Number

EP 25 22 6275

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/091283 A1 (ZEKU TECH SHANGHAI CORP LTD [CN]) 2 May 2024 (2024-05-02)<br>* paragraph [0003] *<br>* paragraph [0017] *<br>* paragraph [0022] *<br>* paragraph [0037] - paragraph [0074] *<br>* figures 1-3 * | 1-14 | INV.<br>H04L25/02 |
| A | OPPO: "Discussion on other aspects", 3GPP DRAFT; R1-2009615 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,<br>no. e-Meeting; 20201026 - 20201113, 8 November 2020 (2020-11-08), XP051952411, [retrieved on 2020-11-08]<br>* page 3, paragraph section 2.3 - page 4 *<br>* table 3 * | 1-14 | |
| A | SAU-HSUAN WU ET AL: "Performance analysis of multistage BLUE/MMSE receivers for DS-CDMA in frequency selective fading channels", NEW FRONTIERS IN TELECOMMUNICATIONS : 2003 IEEE INTERNATIONAL CONFERENCE ON COMMUNICATIONS ; ICC 2003 ; 11 - 15 MAY 2003, ANCHORAGE, ALASKA, USA; [IEEE INTERNATIONAL CONFERENCE ON COMMUNICATIONS.] IEEE OPERATIONS CENTER, PISCATAWAY, NJ,<br>vol. 4, 11 May 2003 (2003-05-11), pages 2532-2536, XP010642903,<br>DOI: 10.1109/ICC.2003.1204403<br>ISBN: 9780780378025<br>* page 2533, right-hand column - page 2534, left-hand column *<br>* figure 1 * | 1-14 | TECHNICAL FIELDS SEARCHED (IPC)<br><br>H04L |

The present search report has been drawn up for all claims

| Place of search | Date of completion of the search | Examiner |
|---|---|---|
| Munich | 21 April 2026 | Marzenke, Marco |

EPO FORM 1503 03.82 (P4C01)

## ANNEX TO THE EUROPEAN SEARCH REPORT
## ON EUROPEAN PATENT APPLICATION NO.

EP 25 22 6275

This annex lists the patent family members relating to the patent documents cited in  the above-mentioned European search report.
The members are as contained in the European Patent Office EDP file on
The European Patent Office is in no way liable for these particulars which are merely given for the purpose of information.

21-04-2026

| Patent document cited in search report | Publication date | Patent family member(s) | Publication date |
|---|---|---|---|
| WO 2024091283 A1 | 02-05-2024 | NONE | |

EPO FORM P0459

For more details about this annex : see Official Journal of the European Patent Office, No. 12/82